(19) Europäisches Patentamt
European Patent Office
Office européen des brevets

(11) EP 3 730 680 A1

(12) **EUROPEAN PATENT APPLICATION**
published in accordance with Art. 153(4) EPC

(43) Date of publication:
**28.10.2020 Bulletin 2020/44**

(21) Application number: **18890006.2**

(22) Date of filing: **12.12.2018**

(51) Int Cl.:
***D01F 6/76*** *(2006.01)* ***B01D 39/16*** *(2006.01)*
***D04H 1/4326*** *(2012.01)* ***D04H 1/4382*** *(2012.01)*

(86) International application number:
**PCT/JP2018/045684**

(87) International publication number:
**WO 2019/124189 (27.06.2019 Gazette 2019/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2017 JP 2017244793**
**05.03.2018 JP 2018038566**

(71) Applicant: **Toray Industries, Inc.**
**Tokyo, 103-8666 (JP)**

(72) Inventors:
- **SUGIMOTO, Takeshi**
  **Iyo-gun, Ehime 791-3193 (JP)**
- **MITSUNAGA, Reo**
  **Iyo-gun, Ehime 791-3193 (JP)**
- **MORI, Tatsuya**
  **Osaka-shi, Osaka 530-8222 (JP)**
- **KOBAYASHI, Yuma**
  **Iyo-gun, Ehime 791-3193 (JP)**

(74) Representative: **Mewburn Ellis LLP**
**Aurora Building**
**Counterslip**
**Bristol BS1 6BX (GB)**

(54) **POLYPHENYLENE SULFIDE SHORT FIBER, FIBROUS STRUCTURE, FILTER FELT, AND BAG FILTER**

(57) Provided is a polyphenylene sulfide short fiber having a monofilament fineness of 0.70 to 0.95 dtex, a strength of 4.5 to 5.5 cN/dtex, a fiber length of 20 to 100 mm, and a melt flow rate (MFR) value of 200 to 295 g/10 min. This polyphenylene sulfide short fiber enables improvements to be made in the dust collection performance and mechanical strength without impairing the fiber productivity or felt productivity.

EP 3 730 680 A1

## Description

### TECHNICAL FIELD

The present invention relates to a polyphenylene sulfide short fiber suitable for bag filters and also relates to a bag filter.

### BACKGROUND ART

Polyphenylene sulfide (hereinafter occasionally referred to as PPS) resins have properties suitable as engineering plastics including excellent heat resistance, barrier property, chemical resistance, electrical insulation, and moist heat resistance, and have been used in various electric/electronic parts, machine parts, automobile parts, films, fibers, and the like that are produced mainly by injection molding or extrusion molding.

For example, PPS materials are widely used for filter cloth intended for various industrial filters such as bag filter for collecting waste gas dust. For example, such a filter cloth can be produced by preparing a base cloth from a spun yarn of PPS short fibers, putting PPS short fibers thereon, and integrating them by needle punching.

Such a filter cloth serves for collecting dust from waste gas to permit the discharge of dust-free exhaust gas to the outside. Bag filters are required to have properties such as dust collection capability and mechanical strength.

There are increased demands for bag filters having high dust collecting capability to ensure a decrease in dust concentrations in waste gas. A generally adopted method to produce a bag filter having increased dust collecting capability is to use a fine fiber. The use of a fine fiber serves to produce a filter cloth containing a larger number of fibers so that dust can be caught easily.

For bag filters, the pulse jet technique is widely used as a method for efficient removal of dust adhering to the filter cloth. The pulse jet technique is a method in which the filter cloth is vibrated by blowing a high-speed airflow periodically to the filter cloth so that dust on the surface of the filter cloth is shaken off before the dust adheres to and accumulates on the surface of the filter cloth. Although the pulse jet technique makes it possible to shake off dust, the mechanical strength of the filter cloth will naturally deteriorate over time as a result of the application of a high-speed airflow as an external force. If the filter cloth fails to have a sufficient mechanical strength and dimensional stability while an external force is applied periodically, there will occur the problem of the breakage of the filter cloth, leading to disability to function as a bag filter. Thus, bag filters are required to have high mechanical strength as an important property. In order to improve the mechanical strength of a bag filter, it is particularly important to increase the tensile strength of the fiber used. The above descriptions show that the PPS fiber to be used in a bag filter should have a low fineness and a high strength as important properties.

As a method for producing a fine PPS fiber, a special drawing technique called flow drawing has been proposed (Patent document 1). It has been proved that raw cotton having a fineness of 0.22 dtex can be produced by the method of this proposal.

A method to produce a high strength PPS fiber by performing high-ratio drawing has been proposed (Patent document 2). It has been proved that a high strength fiber of 5 cN/dtex or more can be produced by the method of this proposal. In Patent document 3, furthermore, high strength raw cotton of 5 cN/dtex or more is obtained by setting the rigid amorphous content within a specified range.

In addition, Patent document 4 proposes a method that uses electrospinning to produce a polyarylene sulfide fiber that is extremely fine and excellent in mechanical strength. It has been proved that a high strength fiber of 5.5 cN/dtex or more that has a very low fineness of 1 μm (about 0.01 dtex) or less can be obtained.

### PRIOR ART DOCUMENTS

### PATENT DOCUMENTS

Patent document 1: Japanese Unexamined Patent Publication (Kokai) No. HEI-2-216214
Patent document 2: Japanese Unexamined Patent Publication (Kokai) No. 2012-246599
Patent document 3: International Publication WO 2013/125514
Patent document 4: Japanese Unexamined Patent Publication (Kokai) No. 2015-67919

## SUMMARY OF INVENTION

### PROBLEMS TO BE SOLVED BY THE INVENTION

However, Patent document 1 uses a special drawing method called flow drawing, leading to a decrease in fiber productivity. In addition, there is no description about a method for improving the strength, and sufficient mechanical strength is not ensured.

The fiber actually obtained by the method described in Patent document 2 has a fineness of 10 dtex or more, and the fiber actually obtained by the method described in Patent document 3 has a fineness of 2 dtex or more, indicating that both fail to have a fineness that is sufficiently low to enhance the dust collecting capability. Patent document 2 presupposes the use of a thick fiber of 10 dtex or more in order to achieve high rigidity and high strength, but it does not mention a method for achieving high rigidity and high strength using a fine fiber. Patent document 3 describes a method that uses a high molecular weight PPS, but the high molecular weight PPS has inferior stringing properties and is disadvantageous in producing a finer fiber.

In Patent document 4, a fine and high strength fiber is obtained, but a special spinning technique called electrospinning is used, leading to a low fiber productivity as compared with other spinning techniques such as melt spinning.

An object of the present invention is to provide a polyphenylene sulfide short fiber that ensures improvement in dust collecting capability and improvement in mechanical strength without suffering from a decrease in fiber productivity or felt productivity.

### MEANS OF SOLVING THE PROBLEMS

The present inventors found that the features described below are important to provide a polyphenylene sulfide short fiber that ensures improvement in dust collecting capability and improvement in mechanical strength without suffering from a decrease in fiber productivity or felt productivity. Thus, the present invention is as described below.

1. A polyphenylene sulfide short fiber having a monofilament fineness of 0.70 to 0.95 dtex, a strength of 4.5 to 5.5 cN/dtex, a fiber length of 20 to 100 mm, and a melt flow rate (MFR) of 200 to 295 g/10 min.
Some preferred embodiments of the present invention are as described below.
2. Having a crystallinity of 30 to 40% and a rigid amorphous content of 40 to 60%
3. Having a birefringence ($\Delta n$) of 0.25 to 0.30
4. Having a crimp frequency of 10 to 16 crimps/25 mm, and a crimp percentage of 12 to 20%
5. A fibrous structure including 10% by weight or more of the polyphenylene sulfide short fiber according to the present invention
6. A felt for filters including at least one or more layers containing the fibrous structure
7. A bag filter made of the felt for filters sewn in a bag shape
8. A method for producing a polyphenylene sulfide short fiber including steps for melt-spinning a polyphenylene sulfide resin having a MFR of 200 to 295 g/10 min to prepare an undrawn yarn, stretching it at a temperature of 80°C to 170°C at a stretching ratio of 2 to 5, subjecting it to fixed-length heat treatment at a temperature of 190°C to 270°C at a stretching ratio of 1.05 to 1.15, crimping it with a stuffing-type crimper, drying it, applying an oil solution to it, and cutting it to a predetermined length.
9. A method for producing a fibrous structure including a polyphenylene sulfide short fiber, the fibrous structure being in the form of a nonwoven fabric, and the nonwoven fabric being produced by a process in which a polyphenylene sulfide short fiber as described in any one of paragraphs 1 to 4 is passed through a carding machine.
10. A method of producing a felt for filters having a three-layer structure containing a fibrous web 31 to form a filtering layer at the air inflow plane, a woven fabric (aggregate) 32, and a fibrous web 33 to form a non-filtering layer at the air outflow plane, including steps for preparing the web 31 by a method as described in the above paragraph 9, combining it with the woven fabric (aggregate) 32 in layers, preparing the web 33, putting it on the stack of the web 31 and the woven fabric (aggregate), and then integrating them by interlacing using such a technique as needle punching and water jet punching as the method to integrate the webs by interlacing.
11. A method for producing a bag filter by sewing a felt for filters as set forth in the above paragraph 6 into a bag shape, wherein a thread containing materials such as polyarylene sulfide, fluorinated resin, and fluorinated resin copolymer is used as the sewing thread for the sewing.

### ADVANTAGEOUS EFFECTS OF THE INVENTION

The present invention serves to provide a polyphenylene sulfide short fiber that ensures improvement in dust collecting capability and improvement in mechanical strength without suffering from a decrease in fiber productivity or

felt productivity.

## BRIEF DESCRIPTION OF THE DRAWINGS

[Fig. 1] This shows an exploded cross-sectional view of a filter material (filter cloth) formed of a nonwoven fabric containing a polyphenylene sulfide short fiber according to the present invention.

## DESCRIPTION OF PREFERRED EMBODIMENTS

The present invention is described in detail below based on preferred embodiments.

The term "PPS" used for the present invention means a polymer containing, as a repeating unit, a phenylene sulfide unit such as a p-phenylene sulfide unit or an m-phenylene sulfide unit as represented by the following structural formula (I).

[Chemical compound 1]

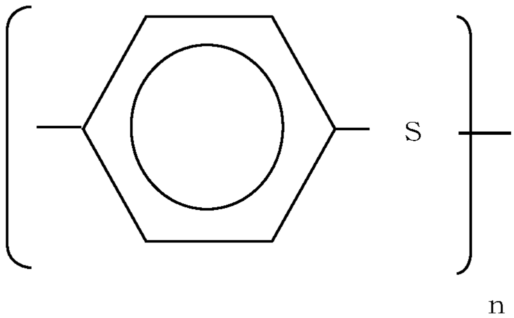

... (I)

The PPS may be either a homopolymer formed only of p-phenylene sulfide units or m-phenylene sulfide units or a copolymer of p-phenylene sulfide units and m-phenylene sulfide units, or may be a copolymer or a mixture with other aromatic sulfides as long as the effect of the present invention is not impaired.

From the viewpoint of heat resistance and durability, a preferred example of a PPS resin used for the present invention is a PPS resin containing, as a repeating unit, p-phenylene sulfide unit as represented by the above structural formula (I), which preferably accounts for 70 mol% or more, more preferably 90 mol% or more. In this case, the other copolymer components in the PPS resin are preferably m-phenylene sulfide units or other aromatic sulfide units.

The weight average molecular weight of a PPS resin used for the present invention is preferably 30,000 to 90,000. If melt spinning is performed using a PPS resin having a weight average molecular weight of less than 30,000, the spinning tension will be so low that yarn breakage may occur frequently during spinning, whereas if a PPS resin having a weight average molecular weight of more than 90,000 is used, the viscosity at the time of melting is so high that the spinning equipment must have a special high pressure resistance specification, which is disadvantageous due to high equipment cost. The weight average molecular weight is more preferably 40,000 to 60,000.

When using a PPS resin for the present invention, good commercial PPS resin products include Torelina (registered trademark), manufactured by Toray Industries, Inc., and Fortron (registered trademark), manufactured by Kureha Corporation.

The fiber length of a PPS short fiber used for the present invention is 20 to 100 mm, preferably 40 to 80 mm. Controlling the fiber length in this range ensures a high felt processability in later steps.

The PPS short fiber used for the present invention has a monofilament fineness of 0.70 to 0.95 dtex, preferably 0.75 to 0.85 dtex. Controlling the monofilament fineness at 0.70 dtex or more ensures a high spinning operability and also ensures a high carding processability due to suppression of fly at the time of felt processing etc. In addition, controlling the monofilament fineness at 0.95 dtex or less can ensure an increased dust collecting capability.

The strength of the PPS short fiber used for the present invention is 4.5 to 5.5 cN/dtex, preferably 4.7 to 5.1 cN/dtex. The mechanical strength of the felt can be improved by setting the strength to 4.5 cN/dtex or more, whereas setting the strength to 5.5 cN/dtex or less can ensure an improved drawing operability and also serves to allow the short fiber to have improved crimping property and ensure a high carding processability due to suppression of fly at the time of felt processing etc.

The melt flow rate (MFR) of a PPS resin used as a raw material for producing a PPS short fiber for the present invention is 200 to 295 g/10 min, preferably 210 to 270 g/10 min, and more preferably 220 to 250 g/10 min. Controlling the MFR to 200 g/10 minutes or more ensures a required fluidity during melting and makes it possible to obtain a fine PPS short fiber. In addition, controlling the MFR to 295 g/10 minutes or less allows the polymer to have a sufficiently high molecular weight and makes it possible to obtain a high-strength PPS short fiber.

Here, since PPS is a resin that will not be deteriorated by hydrolysis or the like, the PPS short fiber according to the present invention, as in the case of the PPS resin used as the raw material thereof, has a MFR of 200 to 295 g/10 min, preferably 210 to 270 g/10 min, and more preferably 220 to 250 g/10 min.

For the PPS short fiber according to the present invention, it is extremely important to simultaneously have a monofilament fineness of 0.70 to 0.95 dtex and a strength of 4.5 to 5.5 cN/dtex. When producing a fine PPS short fiber by the conventional melt spinning method, it is usual to use a resin having a high MFR and a good stringing property, but such resins are generally low in molecular weight, leading to difficulty in increasing the strength. When producing a high-strength PPS short fiber by the conventional melt spinning method, on the other hand, it is usual to use a resin having a low MFR and a high molecular weight, but such resins are generally poor in stringing property and low in spinning operability, leading to difficulty in reducing the fineness. The dust collecting capability is low in the case of high strength and high fineness, whereas the mechanical strength of the felt is low in the case of low fineness and low strength. Thus, as a result of intensive studies by the present inventors, it was found that the use of a resin in the specific MFR range of 200 to 295 g/10 min serves to achieve low fineness and high strength simultaneously.

The elongation percentage of the PPS short fiber according to the present invention is preferably 50.0% or less, still more preferably 40.0% or less. The lower the elongation percentage, the higher the degree of orientation of the molecular chains in the fiber axis direction, which is preferable for improving the strength-related physical properties. The lower limit of the elongation percentage is preferably 5.0% or more in order to ensure high handleability and processability.

The dry heat shrinkage rate at 180°C of the PPS short fiber according to the present invention is preferably 20% or less, more preferably 10% or less, and still more preferably 5% or less. A lower dry heat shrinkage ratio is more preferable because it ensures smaller shrinkage at the time of felt production and during actual use as filters. The lower limit of the dry heat shrinkage rate is not particularly limited, but it is 1% or more as a practically possible range.

The degree of crystallinity of the PPS short fiber according to the present invention is preferably 30% to 40%. Controlling the degree of crystallinity at 30% or more makes it possible to obtain a high strength fiber. Controlling the degree of crystallinity at 40% or less makes it possible to enhance the crimp formation capability of a short fiber and ensures a high carding processability due to suppression of fly at the time of felt processing etc.

The rigid amorphous content of the PPS short fiber according to the present invention is preferably 40% to 60%, more preferably 43 to 55%, and still more preferably 45 to 50%. The term "rigid amorphous" refers to an intermediate state of a polymer between crystal and perfectly amorphous, and is calculated by subtracting the degree of crystallinity (%) and the movable amorphous content (%) from the total percentage (100%) of the crystal and amorphous components that form the fiber, as expressed by the following equation.

$$\text{Rigid amorphous content [\%]} = 100\ [\%] - \text{degree of crystallinity [\%]} - \text{movable amorphous content [\%]}$$

Here, the movable amorphous content referred to for the present invention can be determined from measurements taken by temperature-modulated DSC as described later in Examples. Controlling the rigid amorphous content at 40% or more makes it possible to obtain a high strength fiber. Controlling the rigid amorphous content at 60% or less makes it possible to enhance the crimp formation capability of a short fiber and ensures a high carding processability due to suppression of fly at the time of felt processing etc.

The birefringence ($\Delta n$) of the PPS short fiber according to the present invention is preferably 0.25 to 0.30. Controlling the birefringence at 0.25 or more makes it possible to obtain a high strength fiber. Controlling the birefringence at 0.30 or less makes it possible to enhance the crimp formation capability of a short fiber and ensures a high carding processability due to suppression of fly at the time of felt processing etc.

The crimp frequency of the PPS short fiber according to the present invention is preferably 10 to 16 crimps/25 mm, more preferably 12 to 16 crimps/25 mm. Furthermore, it is important that the crimp percentage is 12% to 20%, preferably 15% to 20%. Controlling the crimp frequency at 10 crimps/25 mm or more and controlling the crimp percentage at 12% or more serves to enhance the interlacing of fibers and ensure a high carding processability due to suppression of fly at the time of felt processing etc. Controlling the crimp frequency at 16 crimps/25 mm or less and controlling the crimp percentage at 20% or less serve to suppress the generation of neps during felt processing and increase the felt processability.

When producing a high-strength PPS short fiber by the conventional melt spinning method, it has been usual to use a resin having a low MFR and a high molecular weight, but such resins are generally high in rigidity, leading to difficulty in increasing the crimp frequency. The felt processability is low in the case of high strength and low crimp frequency, whereas the mechanical strength of the felt is low in the case of low strength and high crimp frequency. Thus, as a result of intensive studies by the present inventors, it was found that the use of a PPS resin in the specific MFR range of 200 to 295 g/10 min serves to achieve high strength and high crimp frequency simultaneously and accordingly achieve high mechanical strength of the felt and high felt processability simultaneously. More specifically, it was found that the use of a PPS resin in the specific MFR range of 200 to 295 g/10 min serves to achieve low fineness, high strength, high crimp frequency simultaneously and accordingly, improvement in dust collection performance and improvement in mechanical strength can be realized simultaneously without suffering a decrease in fiber productivity or felt productivity.

The PPS short fiber according to the present invention may be in the form of a fibrous structure that contains it. Such a fibrous structure preferably includes 10 mass% or more, more preferably 25 mas% or more, and still more preferably 40 mass% or more, of the PPS short fiber according to the present invention relative to the total mass of the fibrous structure. If the PPS short fiber according to the present invention account for 10 mass% or more, it ensures the effect of improving the dust collecting capability.

Examples of the above fibrous structure include cotton-like materials formed of the PPS short fiber according to the present invention as well as cotton-like materials, spun yarns, nonwoven fabrics, woven fabrics, and knitted fabrics formed by mixing it with other fibers, of which nonwoven fabrics, particularly web-type dry nonwoven fabrics, are selected preferably.

The above fibrous structure according to the present invention may be in the form of a felt for filters that contains it. The felt for filters preferably contains at least one layer formed of the fibrous structure according to the present invention. The inclusion of one or more layers formed of the fibrous structure according to the present invention ensures the effect of improving the dust collecting capability. There are no particular restrictions on the form of the fibrous structure according to the present invention, and it may be in the form of a cotton-like material, nonwoven fabric, woven fabric, knitted fabrics, etc., of which nonwoven fabric, particularly web-type dry nonwoven fabric, is selected preferably. There are no particular restrictions on the form of the layers other than those formed of a fibrous structure according to the present invention, and they may be in the form of cotton-like materials, nonwoven fabrics, woven fabrics, knitted fabrics, etc. The materials of such layers other than those formed of a fibrous structure according to the present invention preferably have heat resistance and chemical resistance and accordingly, good materials include polyarylene sulfides, fluorinated resins, and fluorinated resin copolymers, of which polyarylene sulfides, particularly polyphenylene sulfide (PPS), are used preferably.

Although there are no particular restrictions on the construction of the felt for filters according to the present invention, a preferable example is shown in an exploded cross-sectional view in Fig. 1. Fig. 1 shows an exploded cross-sectional view of a filter material (filter cloth) formed of a nonwoven fabric containing the PPS short fiber according to the present invention. In the case of a filter material for surface filtration, for example, a fibrous web 31 shown in Fig. 1, which forms the filtering layer at the air inflow plane, is located at the plane where dustcontaining air first comes into contact with the filter material. In other words, it is the plane where dust collected at the surface of the filter material forms a dust layer. The fibrous structure according to the present invention is used in the fibrous web 31 and contains 10 mass% or more of the PPS short fiber according to the present invention. The opposite plane is formed of a fibrous web 33 that forms the non-filtering layer of the air outflow plane, and it is the plane through which dust-free air is discharged. In addition, a fabric layer 32 (aggregate) is sandwiched between the fibrous web 31 and the fibrous web 33, and they are subjected to a needle punching step to form a felt. A felt thus produced makes it possible to obtain a felt for filters that has excellent mechanical strength properties such as dimensional stability, tensile strength, and abrasion resistance and also has excellent dust collecting capability.

The felt for filters according to the present invention can be sewn in a bag shape to produce bag filters that are suitably used to collect waste gas from a waste incinerator, coal boiler, metal blast furnace, or the like, where heat resistant filters are required. For this sewing step, it is desirable to use threads made of materials having heat resistance and chemical resistance and accordingly, good materials include polyarylene sulfides, fluorinated resins, and fluorinated resin copolymers, of which polyarylene sulfides are used preferably.

Next, a method for producing the PPS short fiber according to the present invention is described below.

It can be obtained by melt spinning of a PPS resin having a MFR of 200 to 295 g/10 min as described above. Powder or pellets of a PPS resin as described above is melted and the molten resin is spun from a spinneret. As the melt spinning machine, a pressure melter type spinning machine or a single or twin screw extruder type spinning machine is generally used. The molten polymer is then discharged from the spinneret and cooled to solidify in a blasted stream of cooling air. After being cooled and solidified, the fiber is provided with an appropriate amount of an oil solution as a sizing agent and then wound up by a predetermined winding device. Specifically, the melting temperature is usually 305°C to 340°C; the flow speed of the cooling air is usually 35 to 100 m/min; the temperature of the cooling air is usually room temperature or lower; and the winding speed is usually in the range of 400 to 3,000 m/min.

Then the wound fiber is usually subjected to a stretching step. In the stretching step, it is preferably sent to travel in a heating bath or on a hot plate or a hot roller for stretching at a stretching temperature of about 80°C to 170°C. The stretching ratio is preferably 2 to 5, more preferably 3 to 4. Regarding the number of stretching stages, it may be stretched in one stage, but preferably in two stages.

Performing fixed-length heat treatment after the hot drawing serves to further promote the crystallization of the fiber and increase the volume of the rigid amorphous component. Conventionally, fixed-length heat treatment is carried out normally by performing heat treatment while maintaining the length of the yarn substantially constant or relaxing the yarn by a few percent. For the production according to the present invention, however, it is important to slightly stretch the yarn, specifically at a draw ratio of 1.05 to 1.15, during the fixed-length heat treatment.

The temperature of fixed-length heat treatment is preferably 190°C or more, more preferably 200°C or more, and still more preferably 210°C or more, which allows the PPS short fiber to have appropriate degrees of strength, crystallinity, rigid amorphous content, and birefringence as described above. It is also preferably 270°C or less, more preferably 240°C or less, which serves to suitably control pseudo-adhesion between fibers.

The time period of fixed-length heat treatment is preferably 5 seconds or more, which allows the PPS short fiber to have appropriate degrees of strength, crystallinity, rigid amorphous content, and birefringence as described above. If the period of fixed-length heat treatment is too long, the strength, crystallinity, rigid amorphous content, and birefringence will only level off, and therefore, the upper limit of the period of fixed-length heat treatment is preferably about 12 seconds.

The present inventors have found that suitable fineness and strength can be realized by subjecting the fiber of the PPS resin in a specific MFR range to fixed-length heat treatment under specific conditions as described above. That is, controlling the molecular orientation and heat-setting property by stretching the fiber during fixed-length heat treatment serves to achieve increased strength even in the case of a PPS resin having a high MFR that is required to realize a low fineness.

After the fixed-length heat treatment step, the yarn is then crimped by a stuffing box type crimper. In this step, the crimps may be heat-fixed by applying steam or the like. In order to fix the crimped state of the yarn of the PPS fiber which has already been crystallized by the fixed-length heat treatment, it is important that the crimping step is performed at a temperature equal to or higher than the temperature of fixed-length heat treatment, although an excessively high steam temperature can cause fusion between the fibers.

Thereafter, if necessary, an oil solution is applied preferably in an amount of 0.01 to 3.0 mass% relative to the fiber weight, and heat treatment under relaxation is performed preferably at a temperature of 50°C to 150°C for 5 to 60 minutes. Then, the yarn is cut to an appropriate length to provide short fibers of PPS. The order of these steps may be changed as necessary.

Next, the method for producing the fibrous structure according to the present invention is described below.

There are no particular restrictions on the form of the fibrous structure according to the present invention, and it may be in the form of a mixed cotton, nonwoven fabric, woven fabric, knitted fabrics, etc., of which nonwoven fabric, particularly dry nonwoven fabric, is selected preferably. To produce such a nonwoven fabric, a suitable method is to pass the PPS short fiber according to the present invention through a card machine to process it into a nonwoven fabric. Here, the fibrous structure according to the present invention should contain only at least 10 mass% of the PPS short fiber according to the present invention and may be mixed with other fibers before feeding it to a card machine.

Next, the method for producing the felt for filters according to the present invention is described below.

The felt for filters according to the present invention includes a three-layer structure containing a fibrous web 31 that forms a filtering layer at the air inflow plane, a woven fabric (aggregate) 32, and a fibrous web 33 that forms a non-filtering layer at the air outflow plane. In a preferable process, the web 31 is first produced by the above method, combining it with the fabric (aggregate) 32 in layers, producing the web 33, putting it on the stack of the web 31 and the woven fabric (aggregate), and then integrating them by interlacing. Good methods for interlacing the webs to integrate them include needle punching and water jet punching.

The PPS short fiber according to the present invention is used in the web 31. Since the material used in the reinforcing cloth and the web in the second web layer preferably has heat resistance and chemical resistance, good examples thereof include polyarylene sulfide, fluorinated resin, and fluorinated resin copolymers, of which polyarylene sulfides, particularly polyphenylene sulfide, are used preferably.

Next, the method for producing the bag filter according to the present invention is described below.

The felt for filters according to the present invention can be sewn into a bag shape to form a bag filter. For this sewing step, it is desirable to use threads made of materials having heat resistance and chemical resistance and accordingly, good materials include polyarylene sulfides, fluorinated resins, and fluorinated resin copolymers, of which polyarylene sulfides, particularly polyphenylene sulfide, are used preferably.

EXAMPLES

Hereinafter, the present invention will be described in more detail with reference to examples, but the present invention is not limited thereto.

(1) Fiber productivity (spinning operability)

The number of yarn breaks per spindle in the spinning step was counted during the 0 to 36 hour period after the start of spinning. A yarn is rated as S when the number of yarn breaks per spindle is less than 3, rated as A when it is 3 or more and less than 6, rated as B when it is 6 or more and less than 9, and rated as C when it is 9 or more.

(2) Felt productivity (card neps)

A web having a weight of 20 g/$m^2$ and a width of 50 cm was carded by a roller card at a rate of 30 m/min for 1 hour under the conditions of 25°C and 65% RH, and the number of neps in samples 1 m long in the length direction taken every 10 minutes was counted visually to examine the state of fuzz ball formation in the web coming out of the carding machine. A web was rated as S when it was in a very good state without fuzz balls, rated as A when it had 8 or less fuzz balls, rated as B when it had 9 to 11 fuzz balls, and rated as C when it had 12 or more fuzz balls.

(3) Felt productivity (card fly)

A web having a weight of 20 g/$m^2$ and a width of 50 cm was carded by a roller card at a rate of 30 m/min for 1 hour under the conditions of 25°C and 65% RH, and it was rated as S when the weight of fly (fly waste) generated in the card was 10 g or less, rated as A when it was more than 10 g and 25 g or less, rated as B when it was more than 25 g and 35 g or less, and rated as C when it was more than 35 g.

(4) Outlet dust concentration (mg/$m^3$)

Dust collecting capability test of filters was carried out under the measuring conditions specified in JIS Z 8909-1 (2005) using an apparatus as specified in VDI-3926 Part I.

The measuring conditions are as described below.

Dust: 10 types of test powder as specified in JIS Z 8901 (2006)
Inlet dust concentration: 5 g/$m^3$
Filtration rate: 2 m/minute
Compressed air tank pressure for pulse jet: 500 kPa
Shake-off pressure loss: 1,000 Pa
Pulse jet time: 50 ms

A test piece of filter cloth was subjected to aging and stabilization treatment according to the "Measurement of dust collecting capability of aged/stabilized filter cloth" specified in JIS Z 8909-1 7.2e and then subjected to test of 30 shake-off runs. During this test period, the volume of air flow and the weight of dust passing through the filter were measured to determine the outlet dust concentration.

(5) Felting strength (N/5 cm)

According to the procedure specified in JIS L1085 (1998), measurements were taken from 5 felt specimens using a constant speed extension type tensile tester and averaged values were obtained for the warp and weft directions.

(6) Fineness

Fineness measurements were taken according to JIS L1015 (2010).

(7) Strength

Using a tensile tester (Tensilon, manufactured by Orientec Corporation), the method described in JIS L1015 (2010) was performed under the conditions of a sample length of 2 cm and a tensile speed of 2 cm/min to obtain a stress-strain curve, from which the tensile strength at the time of cutting was determined.

(8) Degree of crystallinity

Using a differential scanning calorimeter (DSCQ 1000, manufactured by TA Instruments), differential scanning calorimetry was performed in nitrogen gas at a temperature increase rate of 10°C/min to determine the heat of crystallization ΔHc (J/g) at the observed exothermic peak temperature (crystallization temperature). In addition, the heat of fusion ΔHm (J/g) at the endothermic peak temperature (melting point) observed at a temperature of 200°C or higher was also determined. The difference between ΔHm and ΔHc was divided by the heat of fusion of perfect crystal PPS (146.2 J/g) to calculate the degree of crystallinity Xc (%) (equation 1 given below).

$$Xc = \{(\Delta Hm - \Delta Hc) / 146.2\} \times 100 \qquad (1)$$

<DSC>

- Atmosphere: nitrogen flow (50 mL/min)
- Temperature and heat quantity calibration: high purity indium
- Specific heat calibration: sapphire
- Temperature range: 0°C to 350°C
- Temperature increase rate: 10°C/min
- Sample weight: 5 mg
- Sample container: standard container of aluminum

(9) Rigid amorphous component

Using the same apparatus for temperature-modulated DSC as in (8) above, differential scanning calorimetry was performed in nitrogen gas under the conditions of a temperature increase rate of 2°C/min, a temperature amplitude of 1°C, and a temperature modulation period of 60 seconds, and auxiliary lines was drawn as baselines on both sides of the glass transition temperature (Tg) in the chart obtained. The difference between them, which was defined as the difference in specific heat (ΔCp), was divided by the difference in specific heat between both sides of the Tg of perfectly amorphous PPS ($\Delta Cp_0$ = 0.2699 J/g°C), and the movable amorphous content (Xma) was calculated by the following equation (2). In addition, the difference between the total quantity and the sum of the degree of crystallinity (Xc) and the movable amorphous content (Xma) was calculated by the following equation (3) to give the rigid amorphous content (Xra).

$$Xma\ (\%) = \Delta Cp / \Delta Cp_0 \times 100 \qquad (2)$$

$$Xra\ (\%) = 100 - (Xc + Xma) \qquad (3)$$

<Temperature-modulated DSC>

- Atmosphere: nitrogen flow (50 mL/min)
- Temperature and heat quantity calibration: high purity indium
- Specific heat calibration: sapphire
- Temperature range: 0°C to 250°C
- Temperature increase rate: 2°C/min
- Sample weight: 5 mg
- Sample container: standard container of aluminum

(10) Birefringence (Δn)

Using a polarizing microscope (BH-2, manufactured by Olympus Corporation), the retardation and diameter of the monofilament were measured by the compensator method under light with a wavelength of 589 nm from a Na light

source, and results were used to calculate the birefringence.

(11) Crimp frequency

The crimp frequency was measured according to JIS L1015 (2010).

(12) Crimp percentage

The crimp percentage was measured according to JIS L1015 (2010).

(13) Melt flow rate (MFR) value

The melt flow rate was measured according to JIS K7210 (1999) at 315.5°C and a load of 5,000 g.

[Example 1]

First, a fine fiber sample was prepared by the following procedure.

PPS pellets having a MFR value of 240 g/10 minutes, manufactured by Toray Industries, Inc., were vacuum-dried at a temperature of 160°C for 5 hours, fed to a pressure-melter type melt spinning machine, melt-spun at a spinning temperature of 320°C and a discharge rate of 400 g/min, cooled and solidified by a cooling air at room temperature, supplied with a normal type spinning oil solution for PPS, which was intended to serve as sizing agent, and then wound up at a winding speed of 1,200 m/min to obtain an unstretched yarn.

The unstretched yarn obtained was subjected to first stage stretching at a stretching ratio of 3.3 in warm water at 95°C, second stage stretching in steam so that the total stretching ratio would be 3.5, and then fixed-length heat treatment at a stretching ratio of 1.10 while in contact with a hot drum at 230°C. Next, it was crimped by a stuffing-type crimper, dried, treated with an oil solution, and cut to a length of 51 mm to provide a fine, high-strength PPS short fiber. It had a fineness of 0.83 dtex and a strength of 5.1 cN/dtex, indicating that it was low in fineness and strength.

Elsewhere, a PPS short fiber having a monofilament fineness of 3.0 dtex and a cut length of 76 mm (Torcon (registered trademark) S101-3.0T76mm, manufactured by Toray Industries, Inc.) was processed to prepare a spun yarn having a single yarn count of 20s and a number of doubling of 2 (total fineness of 600 dtex). This spun yarn was woven into a woven fabric of a plain weave structure, thus producing a plain weave fabric of a PPS spun yarn having a warp density of 26 yarns/2.54 cm and a weft density of 18 yarns/2.54 cm. A 50:50 (by mass) combined filament yarn fabric formed of the fine, high-strength PPS short fiber and a PPS short fiber having a normal fineness (fineness of 2.2 dtex, cut length 51 mm, Torcon (registered trademark) S371-2.2T51mm, manufactured by Toray Industries, Inc.) were processed by an opener and carding machine, followed by tentative needle punching at a density of 50 punches/cm$^2$ to produce a fibrous web. Then it was attached to one side of the above plain weave fabric, which served as aggregate, so that the metsuke would be 194 g/m$^2$. The fibrous web is intended to form the filtering layer at the air inlet plane. A PPS fiber having a cut length 51 mm (Torcon S371-2.2T51mm, manufactured by Toray Industries, Inc.), which account for 100%, was processed by an opener and carding machine, followed by tentative needle punching at a density of 50 punches/cm$^2$ to produce a fibrous web. Then it was attached to the other side of the fabric so that the metsuke would be 220 g/m$^2$. This fibrous web is intended to form the non-filtering layer at the air outflow plane. Then, needle punching was performed to interlace the fabric (aggregate) and the above-mentioned fibrous webs to obtain a filter having a metsuke of 544 g/m$^2$ and a total punching density of 300 punches/cm$^2$.

The productivity, felt performance, and filter performance are shown in Table 1. A preferred spinning operability and felt productivity were realized. The mechanical strength of the felt was as good as 1,380 N/5 cm in the warp direction and 1,720 N/5 cm in the weft direction, proving an improvement in the mechanical strength. The outlet dust concentration, which serves as an indicator of the dust collecting capability, was as high as 0.21 mg/m$^3$, proving an improvement in the dust collecting capability.

[Example 2]

Except that when fine fiber production was carried out as in Example 1, a PPS pellet manufactured by Toray Industries, Inc. having a MFR value of 215 g/10 minutes was used and that the yarn was extended at a first stage stretching ratio of 3.2 and a total stretching ratio of 3.4, the same procedure as in Example 1 was carried out to produce a fine, high-strength PPS short fiber. It had a fineness of 0.88 dtex and a strength of 4.8 cN/dtex, indicating that it was low in fineness and high in strength.

Using the fine, high-strength PPS short fiber obtained above, the same procedure as in Example 1 was carried out to produce a filter material. The productivity, felt performance, and filter performance are shown in Table 1. A preferred

spinning operability and felt productivity were realized. The mechanical strength of the felt was as good as 1,005 N/5 cm in the warp direction and 1,680 N/5 cm in the weft direction, proving an improvement in the mechanical strength. The outlet dust concentration, which serves as an indicator of the dust collecting capability, was as high as 0.22 mg/$m^3$, proving an improvement in the dust collecting capability.

[Example 3]

Except that when fine fiber production was carried out as in Example 1, a PPS pellet manufactured by Toray Industries, Inc. having a MFR value of 260 g/10 minutes was used and that the yarn was extended at a first stage stretching ratio of 3.5 and a total stretching ratio of 3.7, the same procedure as in Example 1 was carried out to produce a fine, high-strength PPS short fiber. It had a fineness of 0.77 dtex and a strength of 4.7 cN/dtex, indicating that it was low in fineness and high in strength.

Using the fine, high-strength PPS short fiber obtained above, the same procedure as in Example 1 was carried out to produce a filter material. The productivity, felt performance, and filter performance are shown in Table 1. A preferred spinning operability and felt productivity were realized. The mechanical strength of the felt was as good as 903 N/5 cm in the warp direction and 1,508 N/5 cm in the weft direction, showing an improvement in the mechanical strength. The outlet dust concentration, which serves as an indicator of the dust collecting capability, was as high as 0.15 mg/$m^3$, proving an improvement in the dust collecting capability.

[Example 4]

Except that when fine fiber production was carried out as in Example 2, the yarn was extended at a first stage stretching ratio of 3.0 and a total stretching ratio of 3.2, the same procedure as in Example 1 was carried out to produce a fine, high-strength PPS short fiber. It had a fineness of 0.92 dtex and a strength of 4.5 cN/dtex, indicating that it was low in fineness and high in strength.

Using the fine, high-strength PPS short fiber obtained above, the same procedure as in Example 1 was carried out to produce a filter material. The productivity, felt performance, and filter performance are shown in Table 1. A preferred spinning operability and felt productivity were realized. The mechanical strength of the felt was as good as 899 N/5 cm in the warp direction and 1,500 N/5 cm in the weft direction, showing an improved mechanical strength. The outlet dust concentration, which serves as an indicator of the dust collecting capability, was as high as 0.29 mg/$m^3$, proving an improvement in the dust collecting capability.

[Example 5]

Except that when fine fiber production was carried out as in Example 1, the yarn was extended at a first stage stretching ratio of 3.4 and a total stretching ratio of 3.6, the same procedure as in Example 1 was carried out to produce a fine, high-strength PPS short fiber. It had a fineness of 0.79 dtex and a strength of 5.2 cN/dtex, indicating that it was low in fineness and high in strength.

Using the fine, high-strength PPS short fiber obtained above, the same procedure as in Example 1 was carried out to produce a filter material. The productivity, felt performance, and filter performance are shown in Table 1. A preferred spinning operability and felt productivity were realized. The mechanical strength of the felt was as good as 1,402 N/5 cm in the warp direction and 1,733 N/5 cm in the weft direction, showing an improved mechanical strength. The outlet dust concentration, which serves as an indicator of the dust collecting capability, was as high as 0.16 mg/$m^3$, proving an improvement in the dust collecting capability.

[Example 6]

Except that when fine fiber production was carried out as in Example 1, fixed-length heat treatment was performed at a ratio of 1.15, the same procedure as in Example 1 was carried out to produce a fine, high-strength PPS short fiber. It had a fineness of 0.80 dtex and a strength of 5.2 cN/dtex, indicating that it was low in fineness and high in strength.

Using the fine, high-strength PPS short fiber obtained above, the same procedure as in Example 1 was carried out to produce a filter material. The productivity, felt performance, and filter performance are shown in Table 1. A preferred spinning operability and felt productivity were realized. The mechanical strength of the felt was as good as 1,400 N/5 cm in the warp direction and 1,722 N/5 cm in the weft direction, showing an improved mechanical strength. The outlet dust concentration, which serves as an indicator of the dust collecting capability, was as high as 0.20 mg/$m^3$, proving an improvement in the dust collecting capability.

[Example 7]

Except that when fine fiber production was carried out as in Example 1, the yarn was extended at a first stage stretching ratio of 3.5 and a total stretching ratio of 3.7 and that fixed-length heat treatment was performed at a ratio of 1.05, the same procedure as in Example 1 was carried out to produce a fine, high-strength PPS short fiber. It had a fineness of 0.79 dtex and a strength of 4.8 cN/dtex, indicating that it was low in fineness and high in strength.

Using the fine, high-strength PPS short fiber obtained above, the same procedure as in Example 1 was carried out to produce a filter material. The productivity, felt performance, and filter performance are shown in Table 1. A preferred spinning operability and felt productivity were realized. The mechanical strength of the felt was as good as 1,011 N/5 cm in the warp direction and 1,707 N/5 cm in the weft direction, showing an improved mechanical strength. The outlet dust concentration, which serves as an indicator of the dust collecting capability, was as high as 0.16 mg/$m^3$, proving an improvement in the dust collecting capability.

[Example 8]

Except that when fine fiber production was carried out as in Example 1, a PPS pellet manufactured by Toray Industries, Inc. having a MFR value of 205 g/10 minutes was used, the same procedure as in Example 1 was carried out to produce a fine, high-strength PPS short fiber. It had a fineness of 0.89 dtex and a strength of 5.2 cN/dtex, indicating that it was low in fineness and high in strength.

Using the fine, high-strength PPS short fiber obtained above, the same procedure as in Example 1 was carried out to produce a filter material. The productivity, felt performance, and filter performance are shown in Table 1. A preferred spinning operability and felt productivity were realized. The mechanical strength of the felt was as good as 1,400 N/5 cm in the warp direction and 1,730 N/5 cm in the weft direction, showing an improved mechanical strength. The outlet dust concentration, which serves as an indicator of the dust collecting capability, was as high as 0.28 mg/$m^3$, proving an improvement in the dust collecting capability.

[Comparative example 1]

Except that when fine fiber production was carried out as in Example 1, a PPS pellet manufactured by Toray Industries, Inc. having a MFR value of 185 g/10 minutes was used and that the yarn was extended at a first stage stretching ratio of 2.9 and a total stretching ratio of 3.1, the same procedure as in Example 1 was carried out to produce a PPS short fiber.

Using the fine PPS short fiber obtained above, the same procedure as in Example 1 was carried out to produce a filter material. The productivity, felt performance, and filter performance are shown in Table 1. When a resin having a low MFR value was used, only a poor spinning operability and felt productivity were realized.

[Comparative example 2]

Except that when fine fiber production was carried out as in Example 1, a PPS pellet manufactured by Toray Industries, Inc. having a MFR value of 205 g/10 minutes was used, that the yarn was extended at a first stage stretching ratio of 3.0 and a total stretching ratio of 3.1, and that fixed-length heat treatment was performed at a ratio of 1.0, the same procedure as in Example 1 was carried out to produce a PPS short fiber.

Using the fine PPS short fiber obtained above, the same procedure as in Example 1 was carried out to produce a filter material. The productivity, felt performance, and filter performance are shown in Table 1. The PPS short fiber was insufficient in strength and the felt was inferior in mechanical strength.

[Comparative Example 3]

Except that when fine fiber production was carried out as in Comparative example 2, a PPS pellet manufactured by Toray Industries, Inc. having a MFR value of 185 g/10 minutes was used and that the yarn was extended at a first stage stretching ratio of 2.9 and a total stretching ratio of 3.1, the same procedure as in Comparative example 2 was carried out to produce a PPS short fiber.

Using the fine PPS short fiber obtained above, the same procedure as in Example 1 was carried out to produce a filter material. The productivity, felt performance, and filter performance are shown in Table 1. When a resin having a low MFR value was used, the PPS short fiber was large in fineness and inferior in dust collecting capability.

[Comparative example 4]

Except that when fine fiber production was carried out as in Comparative example 2, a PPS pellet manufactured by Toray Industries, Inc. having a MFR value of 310 g/10 minutes was used and that the yarn was extended at a first stage stretching ratio of 3.8 and a total stretching ratio of 4.0, the same procedure as in Comparative example 2 was carried out to produce a PPS short fiber.

Using the fine PPS short fiber obtained above, the same procedure as in Example 1 was carried out to produce a filter material. The productivity, felt performance, and filter performance are shown in Table 1. When a resin having a high MFR value was used, the PPS short fiber was insufficient in strength and the felt was inferior in mechanical strength.

[Comparative example 5]

Except that when fine fiber production was carried out as in Comparative example 2, a PPS pellet manufactured by Toray Industries, Inc. having a MFR value of 350 g/10 minutes was used and that the yarn was extended at a first stage stretching ratio of 4.0 and a total stretching ratio of 4.3, the same procedure as in Comparative example 2 was carried out to produce a PPS short fiber.

Using the fine PPS short fiber obtained above, the same procedure as in Example 1 was carried out to produce a filter material. The productivity, felt performance, and filter performance are shown in Table 1. When the PPS short fiber was too low in fineness, the felt productivity was low. Furthermore, when a resin having a high MFR value was used, the PPS short fiber was insufficient in strength and the felt was inferior in mechanical strength.

[Comparative example 6]

Except that when fine fiber production was carried out as Comparative example 3, a PPS pellet manufactured by Toray Industries, Inc. having a MFR value of 105 g/10 minutes was used, the same procedure as Comparative example 3 was carried out to produce a PPS short fiber.

Using the fine PPS short fiber obtained above, the same procedure as in Example 1 was carried out to produce a filter material. The productivity, felt performance, and filter performance are shown in Table 1. When a resin having a low MFR value was used, the spinning operability was low and the PPS short fiber was high in fineness and inferior in dust collecting capability. Furthermore, the PPS short fiber was high in strength and low in felt productivity.

[Table 1]

[Table 1]

| | | | Example 1 | Example 2 | Example 3 | Example 4 | Example 5 | Example 6 | Example 7 | Example 8 | Comparative example 1 | Comparative example 2 | Comparative example 3 | Comparative example 4 | Comparative example 5 | Comparative example 6 |
|---|---|---|---|---|---|---|---|---|---|---|---|---|---|---|---|---|
| Fiber in web at air inflow plane | fine fiber | mass % | 50 | 50 | 50 | 50 | 50 | 50 | 50 | 50 | 50 | 50 | 50 | 50 | 50 | 50 |
| | fiber with normal fineness (2.2T) | mass % | 50 | 50 | 50 | 50 | 50 | 50 | 50 | 50 | 50 | 50 | 50 | 50 | 50 | 50 |
| air outflow plane | fiber with normal fineness (2.2T) | mass % | 100 | 100 | 100 | 100 | 100 | 100 | 100 | 100 | 100 | 100 | 100 | 100 | 100 | 100 |
| Fiber properties | MFR value | q/10min | 240 | 215 | 260 | 215 | 240 | 240 | 240 | 205 | 185 | 205 | 185 | 310 | 350 | 105 |
| | fineness | dtex | 0.83 | 0.88 | 0.77 | 0.92 | 0.79 | 0.8 | 0.79 | 0.89 | 0.93 | 0.90 | 1.0 | 0.71 | 0.60 | 1.3 |
| | strength | cN/dtex | 5.1 | 4.8 | 4.7 | 4.5 | 5.2 | 5.2 | 4.8 | 5.2 | 4.9 | 4.3 | 4.8 | 3.8 | 3.3 | 5.9 |
| | degree of crystallinity | % | 35 | 33 | 35 | 26 | 36 | 48 | 30 | 36 | 35 | 38 | 34 | 35 | 33 | 33 |
| | rigid amorphous content | % | 48 | 40 | 35 | 37 | 50 | 40 | 65 | 50 | 47 | 32 | 45 | 28 | 20 | 58 |
| | birefringence ($\Delta n$) | - | 0.28 | 0.24 | 0.23 | 0.22 | 0.32 | 0.32 | 0.33 | 0.28 | 0.27 | 0.21 | 0.27 | 0.20 | 0.17 | 0.29 |
| | crimp frequency | Crimps / 25 mm | 16 | 14 | 16 | 16 | 13 | 13 | 14 | 9 | 9 | 13 | 11 | 13 | 14 | 8 |
| | crimp percentage | % | 19 | 17 | 18 | 19 | 13 | 13 | 16 | 11 | 10 | 12 | 10 | 13 | 14 | 7 |

(continued)

| | | | Example 1 | Example 2 | Example 3 | Example 4 | Example 5 | Example 6 | Example 7 | Example 8 | Comparative example 1 | Comparative example 2 | Comparative example 3 | Comparative example 4 | Comparative example 5 | Comparative example 6 |
|---|---|---|---|---|---|---|---|---|---|---|---|---|---|---|---|---|
| Productivity | fiber productivity (spinning operability) | - | S | S | S | S | S | S | S | S | C | A | A | A | B | c |
| | felt productivity (card nep) | - | A | S | A | A | A | A | A | A | S | A | A | A | C | C |
| | felt productivity (card fly) | - | S | S | A | S | B | B | B | B | C | B | B | B | C | C |
| Felt performance | mechanical strength in warp direction | N/5cm | 1380 | 1005 | 903 | 899 | 1402 | 1400 | 1011 | 1400 | 1010 | 707 | 1009 | 504 | 488 | 1490 |
| | mechanical strength in weft direction | N/5cm | 1720 | 1680 | 1508 | 1500 | 1733 | 1722 | 1707 | 1730 | 1660 | 1303 | 1502 | 1003 | 890 | 1818 |
| Filter performance | outlet dust concentration | $mg/m^3$ | 0.21 | 0.22 | 0.15 | 0.29 | 0.16 | 0.20 | 0.16 | 0.28 | 0.33 | 0.35 | 0.50 | 0.18 | 0.17 | 0.52 |

Explanation of Numerals

31: Fibrous web (filtering layer at the air inlet plane)
32: Fabric (aggregate)
33: Fibrous web (non-filtering layer at the air outflow plane)

## Claims

1. A polyphenylene sulfide short fiber having a monofilament fineness of 0.70 to 0.95 dtex, a strength of 4.5 to 5.5 cN/dtex, a fiber length of 20 to 100 mm, and a fiber melt flow rate (MFR) of 200 to 295 g/10 min.

2. A polyphenylene sulfide short fiber as set forth in claim 1 having a degree of crystallinity of 30 to 40% and a rigid amorphous content of 40 to 60%.

3. A polyphenylene sulfide short fiber as set forth in either claim 1 or 2 having a birefringence ($\Delta n$) of 0.25 to 0.30.

4. A polyphenylene sulfide short fiber as set forth in any one of claims 1 to 3 having a crimp frequency of 10 to 16 crimps/25 mm and a crimp percentage of 12 to 20%.

5. A fibrous structure comprising 10 mass% or more of a polyphenylene sulfide short fiber as set forth in any one of claims 1 to 4.

6. A felt for filters comprising at least one or more layers containing a fibrous structure as set forth in claim 5.

7. A bag filter formed of a felt for filters as set forth in claim 6 sewn in a bag shape.

8. A method for producing a polyphenylene sulfide short fiber as set forth in any one of claims 1 to 4 comprising steps for melt-spinning a polyphenylene sulfide resin having a MFR of 200 to 295 g/10 min to prepare an undrawn yarn, stretching it at a temperature of 80°C to 170°C at a stretching ratio of 2 to 5, subjecting it to fixed-length heat treatment at a temperature of 190°C to 270°C at a stretching ratio of 1.05 to 1.15, crimping it with a stuffing-type crimper, drying it, applying an oil solution to it, and cutting it to a predetermined length.

9. A method for producing a fibrous structure comprising a polyphenylene sulfide short fiber, the fibrous structure being in the form of a nonwoven fabric, and the nonwoven fabric being produced by a process in which a polyphenylene sulfide short fiber as set forth in any one of claims 1 to 4 are passed through a carding machine.

10. A method of producing a felt for filters having a three-layer structure containing a fibrous web 31 to form a filtering layer at the air inflow plane, a woven fabric (aggregate) 32, and a fibrous web 33 to form a non-filtering layer at the air outflow plane, comprising steps for preparing the web 31 by the method described in claim 9, combining it with the woven fabric (aggregate) 32 in layers, preparing the web 33, putting it on the stack of the web 31 and the woven fabric (aggregate), and then integrating them by interlacing using such a technique as needle punching and water jet punching as the method to integrate the webs by interlacing.

11. A method for producing a bag filter by sewing a felt for filters as set forth in claim 6 into a bag shape, wherein a thread containing materials such as polyarylene sulfide, fluorinated resin, and fluorinated resin copolymer is used as the sewing thread for the sewing.

【Figure 1】

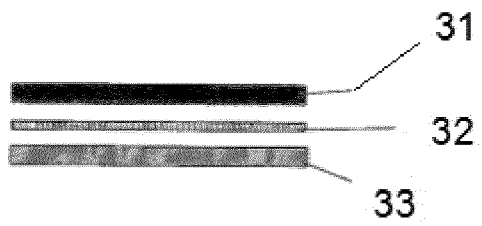

**INTERNATIONAL SEARCH REPORT**

International application No.
PCT/JP2018/045684

A. CLASSIFICATION OF SUBJECT MATTER
Int.Cl. D01F6/76(2006.01)i, B01D39/16(2006.01)i, D04H1/4326(2012.01)i, D04H1/4382(2012.01)i

According to International Patent Classification (IPC) or to both national classification and IPC

B. FIELDS SEARCHED

Minimum documentation searched (classification system followed by classification symbols)
Int.Cl. D01F6/76, B01D39/16, D04H1/4326, D04H1/4382

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-127018 A (TORAY INDUSTRIES, INC.) 05 July 2012, claims, examples 1-5 (Family: none) | 1-11 |
| A | JP 2014-80716 A (TORAY INDUSTRIES, INC.) 08 May 2014, claims, examples 1-5 (Family: none) | 1-11 |
| A | JP 2009-215680 A (TORAY INDUSTRIES, INC.) 24 September 2009, claims, example 1 (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 February 2019 (25.02.2019) | 05 March 2019 (05.03.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/045684

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-209509 A (TORAY INDUSTRIES, INC.) 17 September 2009, claims, example 3 & CN 101503830 A | 1-11 |
| A | JP 2007-31845 A (TORAY INDUSTRIES, INC.) 08 February 2007, claims, example 3 (Family: none) | 1-11 |
| A | WO 2006/059509 A1 (TORAY INDUSTRIES, INC.) 08 June 2006, claims, example 1 & US 2008/0139782 A1, claims, example 1 & CN 101065419 A | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI2216214 B
- JP 2012246599 A
- WO 2013125514 A
- JP 2015067919 A